# EUROPÄISCHE PATENTSCHRIFT

(11) **EP 3 488 133 B1**
(45) Veröffentlichungstag und Bekanntmachung des Hinweises auf die Patenterteilung: **13.12.2023**
(21) Anmeldenummer: 17748387.2
(22) Anmeldetag: 10.07.2017
(51) Int. Cl.: F16L 5/06, F16J 15/06, F16L 19/06, H01R 13/52, H02G 3/06

(54) **VORRICHTUNG ZUR ABGEDICHTETEN DURCHFÜHRUNG EINES LANGFORMTEILS**
DEVICE FOR THE SEALED PASSING-THROUGH OF AN ELONGATE PART
DISPOSITIF SERVANT AU PASSAGE ÉTANCHE D'UNE PIÈCE MOULÉE ALLONGÉE

(30) Priorität: 25.07.2016 DE 102016113655
(43) Veröffentlichungstag der Anmeldung: 29.05.2019
(73) Patentinhaber: Pflitsch GmbH & Co. KG., 42499 Hückeswagen (DE)
(72) Erfinder: BINDER, Karlheinz, 42499 Hückeswagen (DE); LECHNER, Martin, 51789 Lindlar (DE)
(74) Vertreter: Geskes, Christoph
(86) Internationale Anmeldenummer: PCT/DE2017/100570
(87) Internationale Veröffentlichungsnummer: WO 2018/019325

(56) Entgegenhaltungen:
- EP-A1- 2 735 779
- EP-A2- 0 203 263
- DE-A1- 2 547 914
- US-A- 3 215 457

## Beschreibung

Die Erfindung betrifft eine Vorrichtung zum abgedichteten Verschließen einer Öffnung, beispielsweise einer Wandöffnung oder beispielsweise einer Ringöffnung, zwischen einer Durchführungsöffnung durch eine Wand oder Einführöffnung in eine Wand, insbesondere einem oder mehreren durch diese Öffnung oder in diese Öffnung hinein geführten Langformteil/en, sowie einem in die Öffnung eingesetzten Dicht- und/oder Klemmelement.

Im Stand der Technik sind solche Vorrichtungen vielfach bekannt. Diese werden beispielsweise bei Leitungsdurchführungen durch Gehäusewände von elektrischen Geräten eingesetzt, um eine abgedichtete, zugentlastete Durchführung der Kabel zu ermöglichen.

Aus der EP 2 735 779 B1 ist beispielsweise eine Vorrichtung bekannt, bei der ein Lamellenkorb in einen Stutzen eingesetzt ist und in dem ein Dichteinsatz gehalten ist. Die Lamellen und der Dichteinsatz stoßen stirnseitig an das Endstück einer Hutmutter an, welches eine domförmige oder konusförmige Innenwand aufweist, durch die die Lamellen und die Dichtung beim Aufschrauben der Hutmutter auf den Stutzen nach radial innen verdrängt werden und in Montagesolllage ein durch die Vorrichtung geführtes Langformteil einklemmen und abdichten. Die Dichtung liegt an dem Langformteil an, sodass eine Abdichtung erfolgt.

Nachteilig an den bekannten Lösungen ist, dass die Vorrichtungen nur einen relativ kleinen variablen Klemmbereich aufweisen und daher nur Langformteile mit einem kleinen Durchmesserunterschied fassen können. Für größere oder kleinere Klemmbereiche müssen alternative Vorrichtungen zur Verfügung gestellt werden.

DE 25 47 914 A1 beschreibt eine Kabelverschraubung mit einer Zugentlastung, die zwei miteinander verschraubbare Hülsen, eine Ringdichtung und einen Klemmkäfig aufweist.

EP 0 203 263 A2 beschreibt eine Kabelverschraubung mit einer Schraubhülse, einer damit verbundenen Gegenhülse und einem Klemmeinsatz.

US 3,215,457 A beschreibt eine Schlauchkupplung mit zwei verschraubbaren Hülsen und einem mehrteiligen Klemmeinsatz.

EP 2 735 779 A1 beschreibt eine Kabelverschraubung mit einem Stutzen und einer aufschraubbaren Hutmutter sowie einem Dichtungsteil, angeordnet in einem Lamellenkorb.

Der Erfindung liegt daher die Aufgabe zu Grunde, eine kostengünstige Vorrichtung zu schaffen, die zur abgedichteten Durch- oder Einführung von Langformteilen mit einer großen Anzahl von verschiedenen Durchmessern durch oder in eine Öffnung oder zum abgedichteten Verschließen von Öffnungen mit verschiedenen Durchmessern geeignet ist, wobei gleichzeitig eine einfache Montage und eine Vormontage ermöglicht ist. Zudem soll eine Bereicherung der Produktvielfalt erfolgen, also alternative konstruktive Lösungen zur Verfügung gestellt werden.

Dazu wird vorgeschlagen, dass das Dicht- und/oder Klemmelement aus mindestens zwei zusammenwirkenden axial gegeneinander verschiebbaren ersten und zweiten Teilen sowie einer, auf dieses mehrteilige Dicht- und/oder Klemmelement axial wirkenden Druckkontur besteht, und dass durch eine erste axiale Verschiebung der Druckkontur eine axiale Verschiebung mindestens eines zweiten Teils der mindestens zwei zusammenwirkenden axial gegeneinander verschiebbaren ersten und zweiten Teile des Dicht- und/oder Klemmelements gegenüber dem mindestens einen ersten Teil des Dicht- und/oder Klemmelements eine erste Geometrieänderung im Wesentlichen des mindestens einen ersten Teils quer zur Verschieberichtung, beispielsweise radiale Durchmesseränderung, erreicht ist, und dass über eine Hutmutter, eine Druckschraube oder ein Druckteil beziehungsweise deren oder dessen Druckkontur ein Druck axial auf das erste Teil oder das zweite Teil ausübbar ist, sodass dieses mit zunehmender Ein- oder Aufschraubtiefe zunehmend auf das weitere Teil aufschiebbar ist, und dass durch eine weitere axiale Verschiebung der Druckkontur eine weitere Geometrieänderung quer zur Verschieberichtung, beispielsweise radiale Durchmesseränderung, des aus den mindestens zwei zusammenwirkenden axial gegeneinander verschiebbaren ersten und zweiten Teilen bestehenden Dicht- und/oder Klemmelements erreicht ist, wobei eine Begrenzungskontur, die als axiale Wegbegrenzung dient, eine Stützkontur aufweist an der oder in der das erste Teil und/oder das zweite Teil mit dem ersten Endbereich radial innenseitig gestützt oder gehalten ist, so dass dieses beim Aufschieben des weiteren Teils in axialer Richtung gehalten und eine Verschiebung der Teile zueinander möglich ist, und wobei das erste und/oder zweite Teil über ein Drittel seiner Länge von oder in der Stützkontur gehalten ist.

Die axiale Verschiebung der Teile zueinander bewirkt eine radiale Durchmesseränderung, wobei der Grad der Durchmesseränderung in Abhängigkeit von dem Grad der Verschiebung erfolgt, sodass mit zunehmender Verschiebung eine zunehmende radiale Durchmesseränderung erfolgt. Dadurch können mit einer Vorrichtung variable Durchmesser abgedichtet und geklemmt werden.

Vorzugsweise ist dabei vorgesehen, dass zur abgedichteten Durchführung oder Einführung von Langformteilen eine zylindrische Aufnahme an einer Wandung oder in einer Wandung oder an einem an einer Wandung befestigbaren oder mit dieser einstückig ausgebildeten Stutzen ausgebildet ist, in die das eine Durchgangslochung aufweisende Dicht- und/oder Klemmelement eingesetzt ist, sowie eine/ein in den oder auf den Mündungsbereich der zylindrischen Aufnahme einbringbare/s, aufsetzbare/s oder einschraubbare/s gelochte/s Druckschraube, Hutmutter oder Druckteil mit einer Druckkontur oder als Druckkontur angeordnet ist, die oder das auf das Dicht- und/oder Klemmelement einwirkt, dass das Dicht- und/oder Klemmelement aus mindestens zwei hülsenartigen Teilen besteht, deren erstes Teil oder zweites Teil mit einem ersten Endbereich an eine Begrenzungskontur der zylindrischen Aufnahme als axiale Wegbegrenzung angeschlossen ist, deren zweites Teil auf das erste Teil, dieses mindestens teilweise axial verschieblich übergreifend, aufgesteckt ist, wobei ein zweiter Endbereich des ersten Teils und/oder des zweiten Teils durch eine Verdickung des zweiten Teils und/oder des ersten Teils bei mindestens teilweise oder vollständig auf das erste Teil aufgeschobenem zweiten Teil radial verformt ist, und dass in der Druckschraube, der Hutmutter oder dem Druckteil eine Druckkontur ausgebildet ist, mittels derer das zweite Teil oder das erste Teil gegenüber dem ersten Teil oder dem zweiten Teil axial verschiebbar ist und mittels derer mindestens das erste hülsenartige Teil und/oder das zweite hülsenartige Teil in einer Montagesolllage radial verformt ist.

In einer Ausgangslage ist eines der beiden Teile mit seinem ersten Endbereich stirnseitig an die Begrenzungskontur der zylindrischen Aufnahme angeschlossen, z.B. aufgesteckt oder aufgedrückt und in axialer Richtung unverschieblich gehalten, wobei die Begrenzungskontur innerhalb oder außerhalb der zylindrischen Aufnahme angeordnet sein kann. Das zweite Teil ist in der Ausgangslage auf das erste Teil, dieses z.B. etwa zur Hälfte übergreifend, axial verschieblich aufgesteckt.

Die Druckschraube, die Hutmutter oder das Druckteil wirkt in dieser Lage nicht auf die Vorrichtung ein, sodass die hülsenartigen Teile noch unverformt sind und zusammen eine im Wesentlichen zylindrische Durchgangslochung aufweisen, die mit der zylindrischen Aufnahme fluchtet oder zu dieser koaxial ausgebildet ist. Die Durchgangslochung bildet mit der zylindrischen Aufnahme so einen Kanal, durch den ein Kabel oder dergleichen Teil in einfacher Weise geschoben werden kann.

Von dieser Ausgangslage wird die Vorrichtung in einem ersten Schritt in eine erste Montagelage gebracht, in der eine erste Verformung des Dicht- und/oder Klemmelementes erfolgt. Dabei wird über die Hutmutter, die Druckschraube oder das Druckteil bzw. deren oder dessen Druckkontur ein Druck axial auf eines der Teile ausgeübt, sodass dieses mit zunehmender Ein- bzw. Aufschraubtiefe zunehmend auf das weitere Teil aufgeschoben wird. Eines der Teile liegt erfindungsgemäß an der Begrenzungskontur an, die als axiale Wegbegrenzung dient, sodass dieses beim Aufschieben des weiteren Teils in axialer Richtung gehalten und eine Verschiebung der Teile zueinander möglich ist. Bei Erreichen der ersten Montagelage übergreift das zweite Teil das erste Teil bevorzugt mit seiner gesamten Länge. Beide Teile liegen vorzugsweise mit deren ersten Endbereichen an der Begrenzungskontur an.

Eines der Teile weist eine radial umlaufende Verdickung auf, sodass durch die Verschiebung der Teile zueinander eine radiale Verformung des zweiten Endbereiches vorzugsweise eines der Teile erfolgt. Die Verformung des zweiten Endbereiches kann nach radial innen und/oder nach radial außen erfolgen.

In einem zweiten Schritt wird die Vorrichtung in die Montagesolllage gebracht. Dazu wird die Druckschraube, die Hutmutter oder das Druckteil zunehmend in oder auf die Mündung der zylindrischen Aufnahme ein- oder aufgeschraubt, wobei deren oder dessen Druckkontur mit zunehmender Ein- bzw. Aufschraubtiefe einen zunehmend größeren radialen Druck auf das Dicht- und/oder Klemmelement ausübt, sodass die im ersten Schritt erfolgte erste radiale Verformung zusätzlich vergrößert wird und eine optimale Abdichtung und/oder Klemmung mindestens durch die zweiten Endbereiche des Dicht- und/oder Klemmelements erfolgt.

Dabei ist vorzugsweise vorgesehen, dass das die Geometrie ändernde Teil oder die Verdickung eine im zweiten Endbereich des zweiten Teils angeordnete, die Geometrie der Durchgangslochung vorzugsweise radial verkleinernde Verdickung ist, wobei der zweite Endbereich des ersten Teils durch die Verdickung bei mindestens teilweise oder vollständig auf das erste Teil aufgeschobenem zweiten Teil nach radial innen verformt ist und dass in der Druckschraube, der Hutmutter oder dem Druckteil eine deren oder dessen lichte Weite einengende Druckkontur ausgebildet ist, mittels derer mindestens der zweite Endbereich des zweiten Teils vorzugsweise zusammen mit dem ersten Teil in einer Montagesolllage nach radial innen verformt ist.

Dadurch ergibt sich der Vorteil, dass in dem ersten Schritt, in dem das zweite Teil auf das erste Teil aufgeschoben ist, eine radiale Verjüngung der Durchgangslochung erfolgt, sodass die Durchgangslochung vorzugsweise eingeengt ist und ein durchgeführtes Langformteil in der ersten Montagelage bereits in der Vorrichtung klemmend und/oder dichtend gehalten sein kann. Da im ersten Schritt vorzugsweise nur das erste Teil verformt wird, ist ein geringer Kraftaufwand nötig, um die Vorrichtung in die erste Montageposition zu bringen. Beide Teile liegen vorzugsweise an der Begrenzungskontur an, wodurch das zweite Teil ebenfalls in axialer Richtung unverschieblich gehalten ist. Durch den im zweiten Schritt erhöhten einwirkenden Druck durch die die lichte Weite der Hutmutter, der Druckschraube oder des Druckteils einengende Druckkontur, wird eine weitere radiale Verformung radial innen erreicht. Diese Verformung wirkt sich vorzugsweise auch auf das erste Teil aus, sodass dessen im ersten Schritt erfolgte erste radiale Verformung zusätzlich vergrößert wird.

Je weiter die Druckschraube, die Hutmutter oder das Druckteil ein- bzw. aufgeschraubt ist, desto größer ist die Verformung nach radial innen und desto kleiner wird die Durchgangslochung, sodass durch eine geringere Ein- bzw. Aufschraubtiefe große Durchmesser und mit einer größeren Ein- bzw. Aufschraubtiefe kleiner werdende Durchmesser erfasst werden können.

Wegen des Zusammenwirkens der beiden hülsenartigen Teile im Kombination mit der die lichte Weite der Druckschraube, der Hutmutter oder des Druckteils einengenden Druckkontur wird es ermöglicht, eine Vielzahl von Langformteilen oder dergleichen Teile mit unterschiedlichen Durchmessern zu klemmen und zu dichten, ohne dass ein/e durchmessergrößere/r oder -kleinere/r Dichteinsatz bzw. Vorrichtung verwendet werden muss.

Alternativ kann vorzugsweise vorgesehen sein, dass die Verdickung im zweiten Endbereich des ersten Teils angeordnet ist, wobei der zweite Endbereich des zweiten Teils durch die Verdickung bei mindestens teilweise oder vollständig auf das erste Teil aufgeschobenem zweiten Teil nach radial außen verformt ist und dass in der Druckschraube, der Hutmutter oder dem Druckteil eine deren oder dessen lichte Weite einengende Druckkontur ausgebildet ist, mittels derer mindestens das zweite Teil vorzugsweise zusammen mit dem ersten Teil in einer Montagesolllage nach radial außen verformt ist.

Im ersten Schritt wird, beispielsweise über ein Druckteil bzw. dessen Druckkontur, ein Druck auf das erste Teil ausgeübt, sodass die Teile mit zunehmendem einwirkendem Druck aufeinander geschoben werden. Das zweite Teil liegt erfindungsgemäß an der Begrenzungskontur an, die als axiale Wegbegrenzung des einen Teils dient, sodass dieses beim Aufeinanderschieben der Teile in axialer Richtung gehalten und eine Verschiebung der Teile zueinander möglich ist. Bei Erreichen der ersten Montagelage übergreift das zweite Teil vorzugsweise mit seiner gesamten Länge das erste Teil und bevorzugt liegen beide Teile mit dem ersten Endbereich an der Begrenzungskontur an und sind dadurch in axialer Richtung unverschieblich gehalten. Das erste Teil, weist eine radial außen angeordnete Verdickung auf, die beim Verschieben der Teile eine Verformung des zweiten Teils nach radial außen bewirkt, sodass das zweite Teil gegen die Mantelinnenfläche der zylindrischen Aufnahme gedrückt ist und in diesem Bereich eine Abdichtung erfolgt.

In einem zweiten Schritt wird die Vorrichtung in die Montagesolllage gebracht. Dazu wird das das Druckteil zunehmend in oder auf die Mündung der zylindrischen Aufnahme ein- oder aufgebracht oder -geschraubt, wobei dessen Druckkontur mit zunehmender Ein- bzw. Aufschraubtiefe einen zunehmend größeren radialen Druck auf das erste Teil ausübt und dieses zunehmend verformt. Diese Verformung wirkt sich vorzugsweise auch auf das zweite Teil aus, sodass dessen im ersten Schritt erfolgte erste radiale Verformung zusätzlich vergrößert wird.

Dadurch erfolgt eine sichere Abdichtung zu der zylindrischen Aufnahme. Diese kann verschiedene Durchmesser aufweisen, wobei das Druckteil bei größeren Durchmessern zunehmend weiter auf- bzw. eingeschraubt gepresst, geschoben oder dergleichen wird.

Vorzugsweise ist vorgesehen, dass das erste Teil oder das zweite Teil eine im Wesentlichen konstante Dicke über seine Länge aufweist.

Dadurch ist sichergestellt, dass das axiale Verschieben des einen Teils auf dem weiteren Teil leichtgängig und ohne Hemmnisse erfolgt.

Es ist vorzugsweise vorgesehen, dass der Mündungsbereich die Begrenzungskontur der zylindrischen Aufnahme ist.

Dies ist eine besonders kostengünstige und einfache Lösung.

Dabei ist bevorzugt vorgesehen, dass die Begrenzungskontur eine Stufe oder Kante, oder eine dergleichen die zylindrische Aufnahme verjüngende Kontur ist, wobei bevorzugt vorgesehen ist, dass die Begrenzungskontur radial umlaufend in der zylindrischen Aufnahme angeordnet ist.

Dadurch ist eine einfach und kostengünstig herstellbare axiale Begrenzung sichergestellt.

Erfindungsgemäß ist vorgesehen, dass die Begrenzungskontur eine Stützkontur aufweist, an der oder in der das erste Teil und/oder das zweite Teil mit dem ersten Endbereich radial innenseitig gestützt oder gehalten ist. In einer weiteren Ausgestaltung ist vorgesehen, dass die Begrenzungskontur eine Stützkontur aufweist, an der oder in der das erste Teil und/oder das zweite Teil mit dem ersten Endbereich radial außenseitig gestützt oder gehalten wird.

Die Stützkontur sichert die Teile gegen ein unerwünschtes Abrutschen in die oder über die zylindrische Aufnahme. Eine radial innenseitige Abstützung ist vorteilhaft, damit nur der zweite Endbereich des ersten Teils radial verformt ist.

Vorzugsweise ist vorgesehen, dass die Stützkontur ein von der Begrenzungskontur axial vorragender Stützkragen ist.

Eine zylindrische Aufnahme mit einem Stützkragen kann in einfacher und kostengünstiger Weise hergestellt werden.

Aus dem gleichen Grunde kann alternativ bevorzugt vorgesehen sein, dass die Stützkontur eine axiale, stirnseitig offene Nut ist.

Vorzugsweise ist dabei vorgesehen, dass der Stützkragen oder die Schenkel der Nut mit der Mantelaußenfläche und/oder der Mantelinnenfläche der zylindrischen Aufnahme fluchtet oder fluchten.

Dadurch ergibt sich eine ebene Innenmantelfläche in dem Kanal, sodass das Einführen eines Langformteils erleichtert ist.

Bevorzugt ist vorgesehen, dass der an der oder in der Stützkontur gestützte erste Endbereich des ersten Teils gegenüber dem zweiten Endbereich entsprechend der Materialstärke des Stützkragens oder dem radial innenliegenden Schenkel der Nut zurückgesetzt ist, sodass der Innenmantel des ersten Teils in einer Ausgangslage im zweiten Endbereich mit dem Innenmantel des Stützkragens oder dem Nutmantel fluchtet.

So ist in der Ausgangslage eine stufenlose Innenmantelfläche zum Einführen eines Langformteils bereitgestellt.

Auch ist erfindungsgemäß vorgesehen, dass das erste und/oder zweite Teil über ein Drittel seiner Länge von oder in der Stützkontur gestützt oder gehalten ist.

Dadurch ist das entsprechende Teil auch bei einer Verformung des zweiten Endbereiches sicher im Bereich der Stützkontur gehalten, und es steht ausreichend Material über die Stützkontur vor, sodass eine radiale Verformung des zweiten Endbereiches und Abdichtung durch diesen erfolgen kann.

Vorzugsweise ist zudem vorgesehen, dass beide Teile in etwa eine gleiche Länge aufweisen.

Bevorzugt kann vorgesehen sein, dass das die Stützkontur aufweisende oder bildende Teil mit der Druckschraube oder der Hutmutter, insbesondere mit einem Gewindestutzen der Druckschraube oder der Hutmutter, einen Spalt bildet.

Der Spalt bildet eine Führungshilfe für das jeweils axial verschiebliche Teil. In Montagesolllage sind vorzugsweise beide Teile in dem Spalt angeordnet und radial innenseitig durch die Stützkontur und radial außenseitig durch die Hutmutter oder die Druckschraube bzw. deren Gewindestutzen gestützt.

Aus dem gleichen Grunde kann alternativ vorgesehen sein, dass das die Stützkontur aufweisende oder bildende Teil mit der Mantelinnenfläche der zylindrischen Aufnahme einen Spalt bildet.

Bevorzugt ist dabei vorgesehen, dass beide Teile in einer ersten Montagelage stirnseitig an der Begrenzungskontur anliegen.

Dadurch ergibt sich der Vorteil, dass das beide Teile in axialer Richtung fixiert sind und bei Erhöhung des Druckes im zweiten Schritt nur noch eine radiale Verformung erfolgt.

Bevorzugt ist vorgesehen, dass die ersten Endbereiche eine gemeinsame maximale Dicke aufweisen, die dem Maß des Spaltes entspricht.

Beide Teile sind dadurch innen- und/oder außenseitig geführt und gehalten. Einer unerwünschten Drehung oder Knickung der Teile kann zusätzlich durch entsprechende Mittel entgegengewirkt werden.

Auch ist bevorzugt vorgesehen, dass zwischen der Druckschraube oder der Hutmutter, insbesondere einem Gewindestutzen der Druckschraube oder der Hutmutter, und dem zweiten Teil in einer ersten Montagelage ein zweiter Spalt gebildet ist.

Dadurch ergibt sich der Vorteil, dass sich die Hutmutter bzw. die Druckschraube ohne großen Widerstand durch Reibung zwischen dem Gewindestutzen und dem zweiten Teil auf- bzw. einschrauben lässt.

Vorzugsweise ist vorgesehen, dass die verkleinernde Verdickung im zweiten Endbereich des ersten Teils und/oder im zweiten Endbereich des zweiten Teils angeordnet ist und dass der gegenüberliegende erste Endbereich dünnwandig ist.

Diese Form eignet sich besonders, um das zweite Teil mit dem dünnwandigen Bereich auf das erste Teil aufzustecken, sodass es daran gehalten ist. Der Kraftaufwand erhöht sich beim Auf- bzw. Einschrauben bzw. Einbringen der Druckschraube, der Hutmutter oder des Druckteils, sobald die Verdickung den zweiten Endbereich verformt.

Vorzugsweise kann vorgesehen sein, dass die verkleinernde Verdickung in der ersten Montagelage und in der Montagesolllage eine Verjüngung der Durchgangslochung bildet.

Eine Verjüngung in der ersten Montagelage hat den Vorteil, dass ein Langformteil bereits mit geringer Klemmkraft in der Vorrichtung fixierbar ist.

Bevorzugt kann auch vorgesehen sein, dass die Teile mindestens im einander übergreifenden Bereich einander zugewandte Gleitflächen mit geringem Reibungskoeffizienten aufweisen.

Über diese Gleitflächen gleiten die Teile und verformen sich in die gewünschte Position, ohne dass hohe Reibkräfte überwunden werden müssen.

Aus dem gleichen Grunde ist vorzugsweise vorgesehen, dass das zweite Teil mindestens der Druckkontur zugewandte Gleitflächen vorzugsweise mit geringem Reibungskoeffizienten aufweist.

Vorzugsweise ist dabei vorgesehen, dass die Gleitflächen konische, kegelige, kugelige, konkave oder konvexe Flächen sind.

Durch diese Form wird erreicht, dass der Grad der Verformung der Teile mit zunehmender Ein- bzw. Aufschraubtiefe der Druckschraube, Hutmutter oder des Druckteils zunimmt, wodurch der Kraftaufwand beim Festziehen kontinuierlich langsam ansteigt. Dies erleichtert die Montage.

Aus dem gleichen Grunde ist bevorzugt vorgesehen, dass die Druckkontur durch eine sich in Richtung der Mündung konisch, kegelig, kugelig, konkav oder konvex verjüngende Innenwand gebildet ist.

Bevorzugt ist vorgesehen, dass in der Druckschraube, der Hutmutter oder dem Druckteil ein umlaufender Vorsprung angeordnet ist, an dem ein oder mehrere hülsenartigen Teile in axialer Richtung abgestützt sind.

Beim Anziehen der Druckschraube, der Hutmutter oder des Druckteils bis zum Erreichen der ersten Montagelage, stützt sich eines der Teile mit dem zweiten Endbereich an dem Vorsprung ab, sodass das Teil zuerst in axialer Richtung, vorzugsweise bis das zweite Teil mit seiner gesamten Länge auf das erste Teil aufgeschoben ist und/oder beide Teile mit dem erste Endbereich die Begrenzungskontur berühren, verschoben wird. Erst dann gleitet das Teil über den Vorsprung und die radiale Verformung setzt ein und ein höherer Kraftaufwand wird erforderlich.

Bevorzugt ist vorgesehen, dass ein oder mehrere Teile umlaufend axial und/oder schräg gerichtete Rinnen, Rillen, Schlitze oder dergleichen Materialverjüngungen und/oder Materialaussparungen aufweisen.

Dadurch ist die radiale Verformung erleichtert, was insbesondere bei großen Wandstärken vorteilhaft sein kann.

Vorzugsweise ist vorgesehen, dass der Stutzen zur Befestigung an der Wandung einen Montageendbereich, insbesondere ein Außengewinde aufweist, der oder das die Wandung durchgreift.

Um den Stutzen an einer Wandung zu befestigen, weist dieser beispielsweise ein Gewinde auf. Eine Eingriffskontur für ein Werkzeug ist am Stutzen vorgesehen, um den Stutzen in ein Einschraubgewinde einschrauben oder diesen festhalten zu können, wenn eine Kontermutter auf den Gewindebereich aufgeschraubt wird.

Dabei ist bevorzugt vorgesehen, dass das zweite Teil außenseitig hinter dem Außengewinde zurückliegt, also dieses radial nicht übergreift.

Dabei ergibt sich der Vorteil, dass eine Hutmutter auf den Stutzen aufgeschraubt werden kann, ohne dass das Innengewinde der Mutter mit dem zweiten Teil in Eingriff ist und dieses durch das Gewinde beschädigt wird oder mitdreht.

Es ist vorzugsweise vorgesehen, dass die zylindrische Aufnahme aus Metall oder einem formstabilen Kunststoff oder dergleichen formstabilen Material besteht, wobei bevorzugt vorgesehen ist, dass die Druckschraube, die Hutmutter oder das Druckteil aus Metall oder aus einem formstabilen Kunststoff oder dergleichen formstabilen Material bestehen.

Solche Vorrichtungen können kostengünstig hergestellt werden und bieten eine ausreichende Stabilität und Haltbarkeit.

Vorzugsweise kann vorgesehen sein, dass das Druckteil ein Flansch ist, der mittels Befestigungsmitteln vor einem Ausschnitt oder in einem Ausschnitt einer Wandung befestigbar ist und der eine zur Durchführungsöffnung koaxiale Lochung aufweist.

Dies eignet sich z.B. dann, wenn das Dicht- und/oder Klemmelement in einer Wandung angeordnet ist. Dazu weist der Flansch beispielsweise Durchgangslochungen auf, durch die entsprechende Befestigungsmittel hindurchgeführt werden können und mit denen der Flansch an der Wandung befestigbar ist. Dies können beispielsweise Schrauben oder Bolzen sein. Durch das Festziehen der Befestigungsmittel wird der Flansch auf an die Wandung gepresst und übet auf das darin angeordnete Dicht- und/oder Klemmelement einen Druck aus.

Bevorzugt ist vorgesehen, dass das erste Teil und das zweite Teil aus Kunststoff bestehen, wobei bevorzugt vorgesehen ist, dass das erste Teil und/oder das zweite Teil eine die Gleitfähigkeit verbessernde Beschichtung aufweisen oder aus gleitbegünstigenden Materialien bestehen, und wobei vorzugsweise vorgesehen ist, dass das zweite Teil gegenüber dem ersten Teil formstabiler ist, insbesondere aus einem formstabilen Kunststoff besteht, während das erste Teil aus einem elastomeren, gummielastischen Kunststoff besteht.

Kunststoffe eignen sich besonders für die Teile, da sie leicht verformbar, besonders haltbar und kostengünstig herstellbar sind.

Die Beschichtung kann beispielsweise eine Polymerbeschichtung sein. Solche Beschichtungen ermöglichen eine gleichmäßige Bewegung der beiden Teile zueinander, ohne dass die Teile aneinander haften bleiben. Als Beschichtung eignet sich beispielsweise PTFE. Möglich ist auch, dass eines der Teile oder beide Teile aus PTFE bestehen.

Besonders vorteilhaft ist es, das zweite Teil gegenüber dem ersten Teil formstabiler zu gestalten, damit dieses durch den einwirkenden Druck axial, vorzugsweise bis zum Erreichen der Begrenzungskontur, verschoben werden kann, ohne dabei bereits in radialer Richtung zu verformen.

Das erste Teil ist besonders bevorzugt aus einem elastomeren, gummielastischen Kunststoff, beispielsweise Elastomere, um eine leichte Verformung sicherzustellen. Der gummielastische Kunststoff schmiegt sich außerdem an das zweite Teil und das Langformteil an, sodass eine hohe Dichtigkeit und/oder Klemmung erreicht wird.

Es kann bevorzugt vorgesehen sein, dass das erste Teil aus verschiedenen Werkstoffen besteht, wobei der Werkstoff des ersten Endbereichs eine höhere Stabilität oder Formfestigkeit aufweist als der Werkstoff des zweiten Endbereiches, und/oder das zweite Teil gegenüber dem ersten Teil formstabiler ist, insbesondere aus einem formstabilen Kunststoff besteht, während das erste Teil aus einem elastomeren, gummielastischen Kunststoff besteht.

Es ist vorzugsweise vorgesehen, dass Mittel zur Verhinderung von Mitdrehen oder Knicken an mindestens einem der hülsenartigen Teile vorgesehen sind.

Bevorzugt ist vorgesehen, dass ein oder mehrere weitere insbesondere formähnliche hülsenartige Teile axial verschieblich auf das zweite Teil oder ein weiteres Teil aufgesteckt ist oder sind, wobei vorzugsweise vorgesehen ist, dass die Verdickung eines jeden weiteren formähnlichen aufgesteckten Teils gegenüber dem jeweils vorigen Teil eine größere Dicke aufweist, und dass die Länge jedes weiteren hülsenartigen Teils zwischen der Verdickung und dem der Verdickung abgewandten freien Ende kürzer ist als die Länge des vorhergehenden Teils.

Durch diese Anordnung der hülsenartigen Teile, kann die Vorrichtung noch variabler eingesetzt werden, da ein noch größerer Klemmbereich erreichbar ist, mit dem unterschiedliche Langformteile gefasst werden können. Durch die kaskadenartige Anordnung der Teile ist eine größere Klemmkraft, eine höhere Dichtigkeit gegeben und ein größerer Klemmweg erreicht.

Vorzugsweise ist vorgesehen, dass im Kontaktbereich zwischen dem ersten Endbereich des ersten Teils und der Begrenzungskontur Mittel zur Erhöhung der Demontagekraft, insbesondere geometrische Mittel, angeordnet sind, wobei bevorzugt vorgesehen ist, dass die Mittel als hakenartig ineinandergreifende Haltekonturen ausgebildet sind.

Dadurch ergibt sich der Vorteil, dass das erste Teil beim Lösen der Druckkontur auf der oder in der zylindrischen Aufnahme verliersicher gehalten ist, während die Druckkontur und das zweite Teil demontiert werden können.

Dabei ist vorzugsweise vorgesehen, dass im Bereich des zweiten Teils, der von der Druckschraube, der Hutmutter oder dem Druckteil umgriffen ist, Mittel zur Krafteinleitung zum Abziehen bzw. Demontieren des zweiten Teils aus der Montagesolllage ausgebildet sind, um mit Hilfe der Mittel eine Erleichterung der Demontage gegenüber dem an dem Stutzen, insbesondere an die Begrenzungskontur angeschlossenen ersten Teil, zu bewirken, wobei bevorzugt vorgesehen ist, dass am zweiten Teil und an der Druckschraube, der Hutmutter oder dem Druckteil miteinander in Montagelage in Eingriff stehende Mittel ausgebildet sind, die bei der Demontage die Krafteinleitung zwischen Druckschraube, Hutmutter oder Druckteil und zweiten Teil zum Abziehen des zweiten Teils gegenüber dem ersten Teil bewirken.

Dadurch ist das zweite Teil beim Demontieren der Druckschraube, der Hutmutter oder des Druckteils in dieser oder diesem gehalten und kann von dem ersten Teil abgezogen werden. Bevorzugt ist dabei vorgesehen, dass am Innenmantel oder Umgriffsbereich der Druckschraube, der Hutmutter oder des Druckteils, welcher das zweite Teil in der Montagelage überdeckt, ein Freiraum ausgebildet ist, der die axiale Beweglichkeit des zweiten Teils, insbesondere mit dessen Mittel oder während der Montage nicht einschränkt, in der Demontagelage aber Bestandteil der die Demontage bewirkenden Mittel ist.

Die die Krafteinleitung bewirkenden Mittel sind bei der Montage in dem Freiraum angeordnet, der eine radial umlaufende Ausnehmung ist, wobei die Ausnehmung der Länge des Spannweges entspricht, sodass eine axiale Bewegung der Druckschraube, der Hutmutter oder des Druckteils in axialer Richtung beim Ein- bzw. Aufschrauben und Abschrauben nicht behindert ist. Bei der Demontage kann beispielsweise eine den Freiraum begrenzende Randkante ein Mittel zum Abziehen des zweiten Teils sein.

Es ist bevorzugt vorgesehen, dass in der zylindrischen Aufnahme, insbesondere in dem Stutzen, Mittel zum Kontaktieren oder Klemmen eines elektrisch leitenden oder schützenden, im äußeren Bereich des Kabels angeordneten Teils des Kabels, vorzugsweise eines Kabelschirms, konzentrischen Außenleiters oder Schutzgeflechtes, angeordnet sind.

Bevorzugt ist vorgesehen, dass das Mittel zur Kontaktierung eines Kabelschirms, eine Feder, vorzugsweise eine geschlossene Ringfeder mit dreieckigem Querschnitt, ist.

Es kann bevorzugt vorgesehen sein, dass die Mittel zum Klemmen eines leitenden oder schützenden Teil des Kabels radial oder axial wirkende Flächen sind, die über eine Kraft, vorzugsweise eine mechanisch durch Verschrauben mindestens eines weiteren Teils mit dem Stutzen und/oder eine Federkraft auf den elektrisch leitenden oder schützenden Teil des Kabels wirken.

Ein Ausführungsbeispiel der erfindungsgemäßen Vorrichtung ist in der Zeichnung dargestellt und im Folgenden näher beschrieben.

Es zeigt:
- Fig. 1: eine Vorrichtung in Ausgangslage im Längsschnitt;
- Fig. 2: die Vorrichtung in einer ersten Montagelage im Längsschnitt;
- Fig. 3: die Vorrichtung in Montagesolllage im Längsschnitt;
- Fig. 4: die Vorrichtung im zusammengesetzten Zustand in Ansicht;
- Fig. 5: eine Variante eines Details der Vorrichtung in Ansicht;
- Fig. 6: eine weitere Variante eines Details der Vorrichtung in Ansicht;
- Fig. 7: eine Variante der Vorrichtung in Ausgangslage im Längsschnitt; und
- Fig. 8: eine Variante der Vorrichtung in Ausgangslage im Längsschnitt.

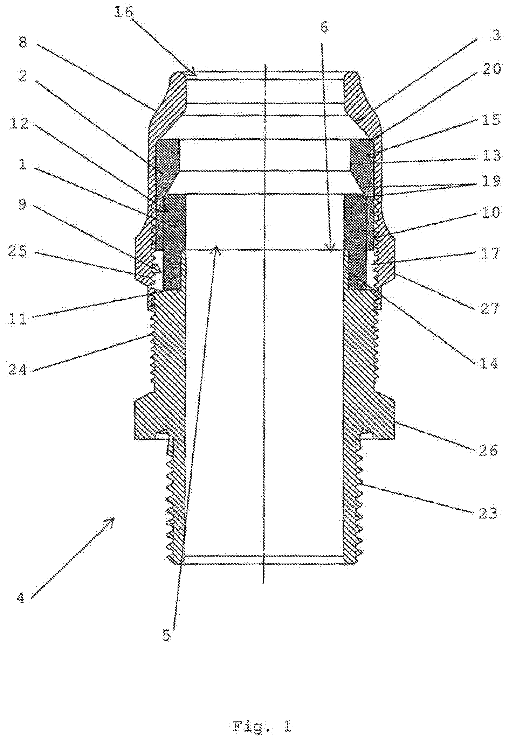

Fig. 1 zeigt die Vorrichtung in Ausgangslage. Die Vorrichtung umfasst eine zylindrische Aufnahme in Form eines Stutzens 4, in den ein Dicht- und/oder Klemmelement mit einer Durchgangslochung 5 eingesetzt ist, sowie eine auf ein Außengewinde 24 des Stutzens 4 im Mündungsbereich 6 teilweise aufgeschraubte Hutmutter 8. In dieser Lage liegt das Dicht- und/oder Klemmelement in einem unverformten Zustand vor.

Das Dicht- und/oder Klemmelement besteht aus einem ersten und einem zweiten hülsenartigen Teil 1, 2, wobei das erste Teil 1, welches eine im Wesentlichen konstante Dicke von wenigen Millimetern aufweist, mit seinem ersten Endbereich 9 stirnseitig an eine Begrenzungskontur 11 des Stutzens 4 angeschlossen ist, z.B. an dieser anliegt.

Der Stutzen 4 weist stirnseitig die Begrenzungskontur 11 mit einer Stützkontur 14 in Form eines axial vorragenden Stützkragens auf, auf den das erste Teil 1 mit seinem ersten Endbereich 9, etwa mit einem Drittel seiner Länge, aufgesteckt ist und an dem der erste Endbereich 9 innenseitig radial umlaufend gestützt ist. Dieser erste Endbereich 9 des ersten Teils 1 ist gegenüber dem zweiten Endbereich 12 innenliegend entsprechend der Materialstärke der Stützkontur 14 zurückgesetzt, sodass der Innenmantel des ersten Teils 1 im zweiten Endbereich 12 mit der Stützkontur 14 fluchtet. Dadurch weist der durch eine Durchgangslochung 5 und die zylindrische Aufnahme gebildete Kanal, eine stufenlose Innenmantelfläche auf, durch die ein Langformteil in einfacher Weise hindurchgeführt werden kann.

Die Stützkontur 14 bildet mit dem Innenmantel der Hutmutter 8 einen Spalt 17, in dem der erste Endbereich 9 des ersten Teils 1 angeordnet ist und der bei aufgeschraubter Hutmutter 8 mindestens auch einen Teil des dünnwandigen ersten Endbereichs 10 des zweiten Teils 2 aufnimmt. Der zweite Endbereich 12 des ersten Teils 1 ragt über den Stutzen 4 bzw. über die Stützkontur 14 vor und kann in Montagesolllage nach radial innen verformt sein.

Das zweite Teil 2 weist etwa über die Hälfte seiner Länge einen dünnwandigen ersten Endbereich 10 und etwa zur Hälfte seiner Länge einen etwa dreimal dickeren dickwandigen zweiten Endbereich 15 auf, wobei der dickwandige Bereich die Verdickung 13 ist. Mit dem dünnwandigen ersten Endbereich 10 ist das zweite Teil 2 auf den zweiten Endbereich 12 des ersten Teils 1 aufgesteckt. Die Verdickung 13 überragt das erste Teil 1 in Ausgangslage.

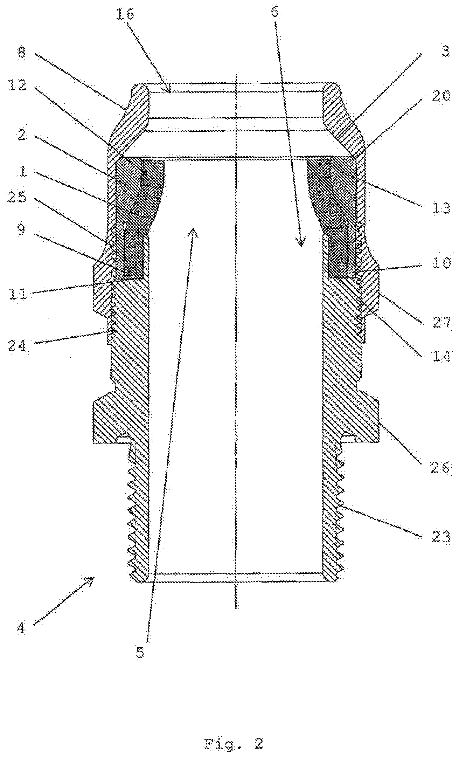

Die Hutmutter 8 ist teilweise, die beiden Teile 1, 2 übergreifend, auf den Stutzen 4 aufgeschraubt, wobei deren Innengewinde 25 mit dem Außengewinde 24 des Stutzens 4 in Eingriff ist. Ein Langformteil, welches in den Figuren nicht dargestellt ist, wird durch den Stutzen 4 eingeführt und die Vorrichtung wird in einem ersten Schritt in die erste Montagelage gebracht, die in Fig. 2 gezeigt ist.

Dazu wird die Hutmutter 8 z.B. per Hand angezogen und das Dicht- und/oder Klemmelement insbesondere dessen erstes Teil 1 im zweiten Endbereich 11 teilweise nach radial innen verformt. Bei Erreichen der ersten Montagelage ist das Innengewinde 25 teilweise, nämlich etwa zur Hälfte, auf das Außengewinde 24 aufgeschraubt.

Die die lichte Weite einengende Druckkontur 3 der Hutmutter 8 übt beim Anziehen der Hutmutter 8 einen axialen Druck auf das zweite Teil 2 aus und schiebt dieses mit dem dünnwandigen ersten Endbereich 10 in den Spalt 17 zwischen Hutmutter 8 und Stützkontur 14 bzw. ersten Endbereich 9. Das zweite Teil 2 wird mit zunehmender Einschraubtiefe der Hutmutter 8 axial weiter auf das erste Teil 1 aufgeschoben und übergreift das erste Teil 1 in der ersten Montagelage vollständig.

Auch das zweite Teil 2 stößt dann mit seinem dem Stutzen 4 zugewandten Endbereich 10 an den Stutzen 4, bzw. an die Begrenzungskontur 11, stirnseitig an und sitzt gemeinsam mit dem ersten Endbereich 9 in dem Spalt 17 zwischen der Hutmutter 8 und der Stützkontur 14. Der erste Endbereich 10 und der erste Endbereich 9 weisen zusammen eine etwa dem Spalt 17 entsprechende Dicke auf, wobei das zweite Teil 2 radial etwas hinter dem Außengewinde 24 zurück liegt. Durch das stirnseitige Anliegen des zweiten Teils 2 und das Anliegen an der Druckkontur 3 ist dieses in axialer Richtung fixiert.

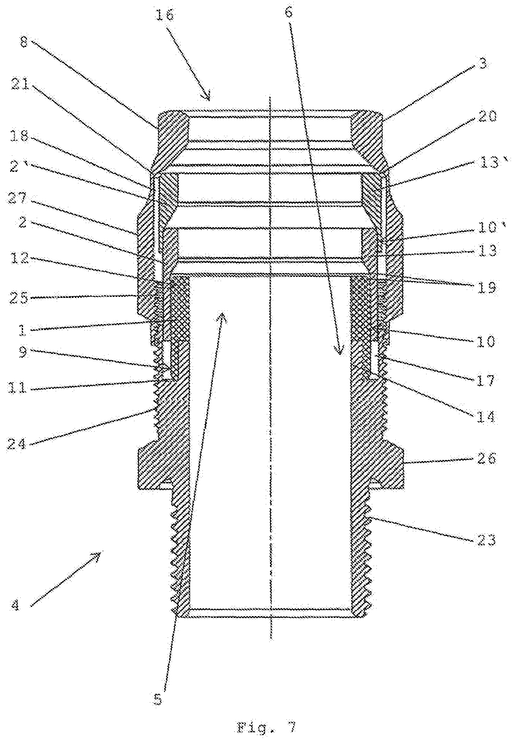

Um sicherzustellen, dass das zweite Teil 2 in dem ersten Schritt maximal verschoben ist, vorzugsweise bis zum Erreichen des Stutzens 4, kann in der Hutmutter 8 ein umlaufender Vorsprung 21, vorzugsweise zwischen dem Innengewinde 25 und der Druckkontur 3, angeordnet sein, der stirnseitig auf den zweiten Endbereich 15 des zweiten Teils 2 einwirkt. Ein solcher Vorsprung 21 ist in Fig. 7 dargestellt.

Der über den Stutzen 4 vorragende zweite Endbereich 12 des ersten Teils 1 wird durch die Verdickung 13 des zweiten Teils 2 zunehmend nach radial innen verformt. Die Durchgangslochung 5 ist daher in der ersten Montagelage etwas eingeengt, sodass ein darin befindliches Langformteil vormontiert, klemmend und gedichtet gehalten ist.

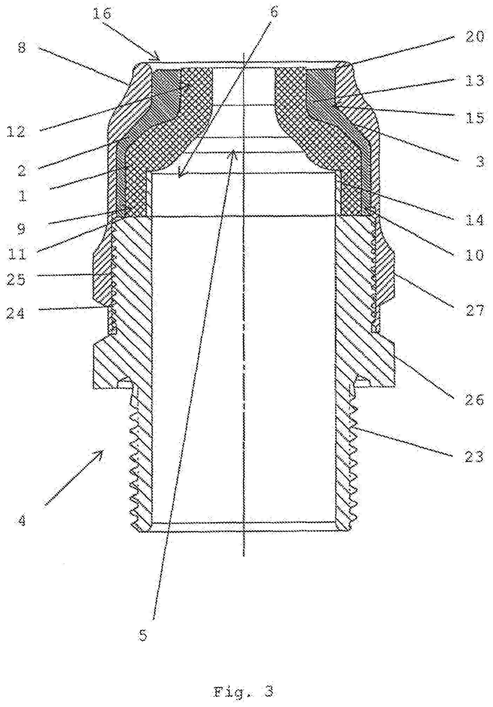

In einem zweiten Schritt wird die Hutmutter 8 z.B. mit Hilfe eines Werkzeuges in die Montagesolllage gebracht, die Fig. 3 zeigt. Dazu weist die Hutmutter 8 eine Eingriffskontur 27 für ein entsprechendes Werkzeug auf, beispielsweise einen Schraubenschlüssel.

Das zweite Teil 2 liegt radial außenseitig hinter dem ersten Außengewinde 24 zurück, wodurch sich der Vorteil ergibt, dass die Hutmutter 8 auf den Stutzen 4 aufgeschraubt werden kann, ohne dass das Innengewinde 25 der Hutmutter 8 mit dem zweiten Teil 2 in Eingriff ist und dieses durch das Außengewinde 24 beschädigt wird oder mitdreht. Zusätzlich kann ein Spalt 18 zwischen der Hutmutter 8 und dem zweiten Teil 2 vorgesehen sein.

Die Druckkontur 3 der Hutmutter 8 übt beim Anziehen im Wesentlichen einen axialen Druck auf das zweite Teil 2 aus, wobei das zweite Teil 2 stirnseitig am Stutzen 4 anliegt und dadurch axial fixiert ist. Um dem Druck nachzugeben, erfolgt eine zunehmende Verformung nach radial innen. Die Druckkontur 3 ist durch eine sich in Richtung der Durchgangsöffnung 6 konisch, kegelig, kugelig, konvex oder konkav verjüngende Innenwand gebildet, wobei das zweite Teil 2 der Druckkontur 3 zugewandte Gleitflächen 20 mit geringem Reibungskoeffizienten aufweist, sodass der Grad der Verformung des zweiten Teils 2 mit zunehmender Aufschraubtiefe der Hutmutter 8 ansteigt und entsprechend der Kraftaufwand ansteigt. Auch zwischen den Teilen 1, 2 sind entsprechend ausgebildete schräge Gleitflächen 19 angeordnet, sodass diese bei der Verformung übereinander gleiten können.

Die Verformung des zweiten Teils 2 wirkt auch auf den zweiten Endbereich 12 des ersten Teils 1, welches mit seinem ersten Endbereich 9 hinter der Stützkontur 14 gehalten ist. Dadurch ist die im ersten Schritt erfolgte radiale Verformung des ersten Teils 1 verstärkt und das in der Durchgangslochung 5 befindliche Langformteil ist abgedichtet eingeklemmt und gehalten, wobei unterschiedlichste Durchmesser des Langformteils geklemmt und gedichtet werden.

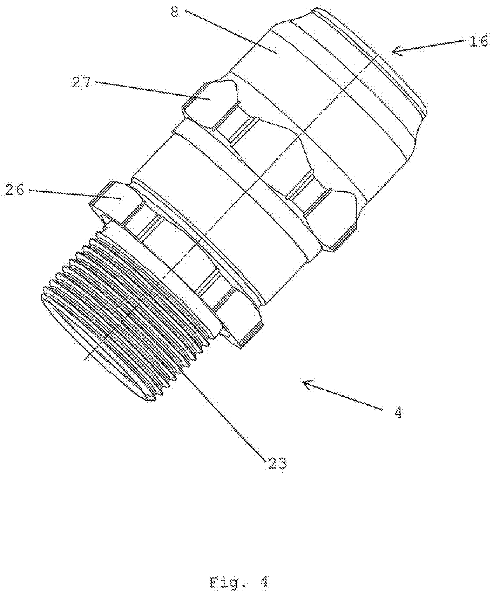

Fig. 4 zeigt die Vorrichtung im zusammengesetzten Zustand. Die Hutmutter 8 ist auf den Stutzen 4 aufgeschraubt, wobei sowohl der Stutzen 4, zur Befestigung in einer Montagewand, als auch die Hutmutter 8, zum Anziehen der Hutmutter 8 auf dem Stutzen 4, eine Eingriffskontur 26, 27 für einen Schraubenschlüssel aufweisen. An einem Ende des Stutzens 4 ist ein Außengewinde 23 vorgesehen, mit dem der Stutzen 4 durch die Montagewand gesteckt werden kann. Zur Fixierung kann eine Kontermutter aufgeschraubt werden, ggf. unter Zwischenlage eines Dichtringes.

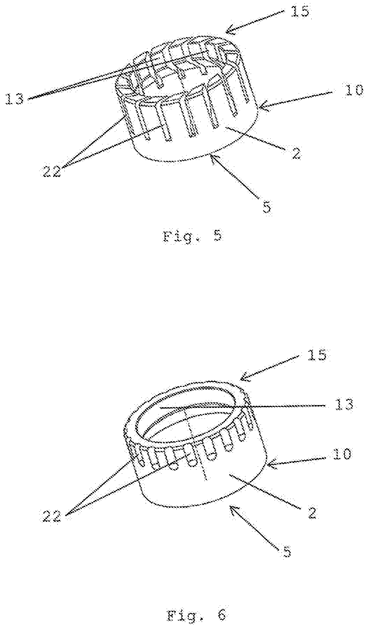

Fig. 5 und 6 zeigen jeweils das zweite Teil 2, wobei dieses axial und/oder schräg gerichtete Rinnen, Rillen, Schlitze 22 oder dergleichen Materialverjüngungen und/oder Materialaussparungen aufweisen kann, was insbesondere vorteilhaft ist, wenn es sich um massive Elemente mit entsprechender Wandstärke handelt. Diese sind ansonsten nur schwer verformbar.

Der Stutzen 4 und die Hutmutter 8 bestehen aus Metall oder aus einem formstabilen Kunststoff oder dergleichen formstabilen Material. Diese sind dauerhaft funktionstüchtig und entsprechend kostengünstig herstellbar.

Das erste Teil 1 besteht bevorzugt aus einem elastomeren, gummielastischen Kunststoff, um eine leichte Verformung sicherzustellen. Der gummielastische Kunststoff schmiegt sich an die Begrenzungskontur 11, die Stützkontur 14 und das nicht dargestellte Langformteil an, sodass eine hohe Dichtigkeit erreicht ist.

Das zweite Teil 2 weist gegenüber dem ersten Teil 1 eine höhere Formstabilität auf und besteht z.B. aus einem Elastomer, damit dieses durch den einwirkenden Druck der Hutmutter 8 axial, vorzugsweise bis zum Erreichen des Stutzens 4 verschoben werden kann, ohne dabei bereits in radialer Richtung zu verformen.

Eines oder beide Teile 1, 2 kann bzw. können mit einer gleitreibungsmindernden Beschichtung, beispielsweise einer Polymerbeschichtung, ausgestattet sein. Diese ermöglicht die axiale Bewegung der beiden Teile 1, 2 zueinander, ohne dass die Teile 1, 2 aneinander haften bleiben. Als Beschichtung eignet sich beispielsweise PTFE. Möglich ist es auch, dass eines der Teile oder beide Teile 1, 2 aus PTFE besteht oder bestehen.

Fig. 7 zeigt eine Variante bei der ein weiteres dem zweiten Teil 2 formähnliches hülsenartiges Teil 2' axial verschieblich auf das zweite Teil 2 aufgesteckt ist. Es können noch weitere hülsenartige Teile 2 aufgesteckt sein. Die Verdickung 13' des weiteren Teils 2' weist eine gegenüber dem zweiten Teil 2 größere Dicke auf.

Durch diese Ausgestaltung, wird die Vorrichtung noch variabler einsetzbar, da ein noch größerer Klemmbereich zur Verfügung steht. Es ist möglich, mit einer Vorrichtung Langformteile mit verschiedenen Durchmessern abgedichtet und geklemmt durch eine Wandöffnung zu führen. Außerdem ist durch die kaskadenartige Anordnung der Teile 2, 2' eine größere Klemmkraft und eine noch größere Abdichtung gegeben.

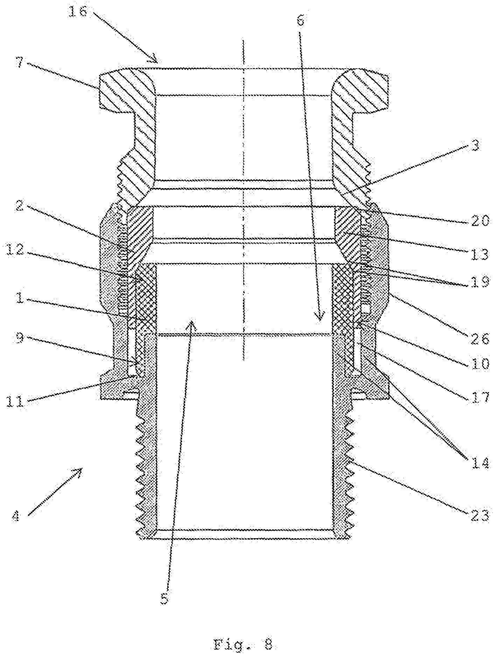

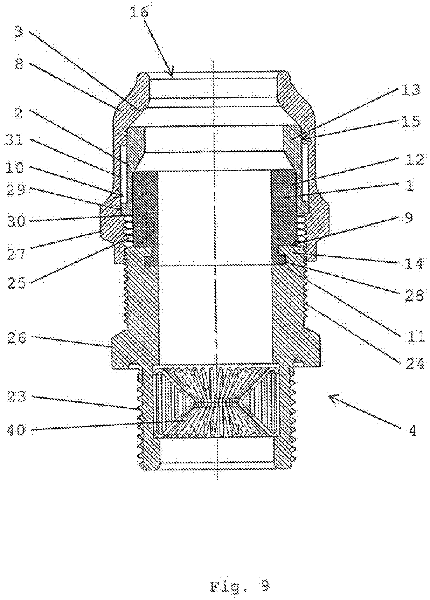

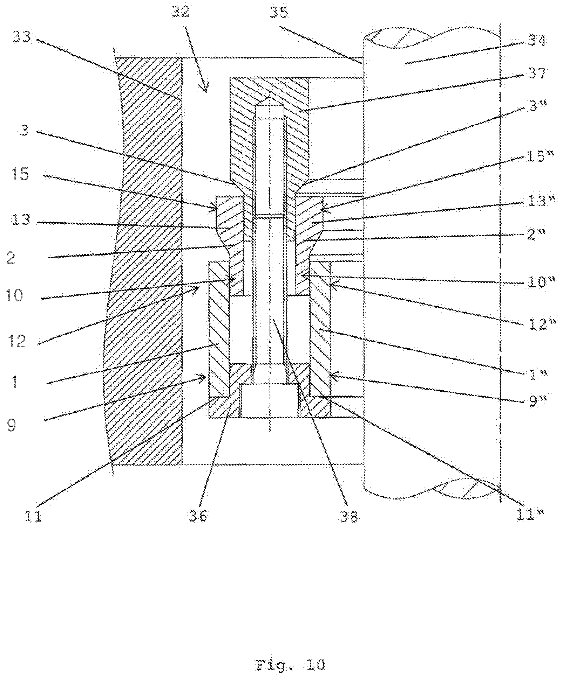

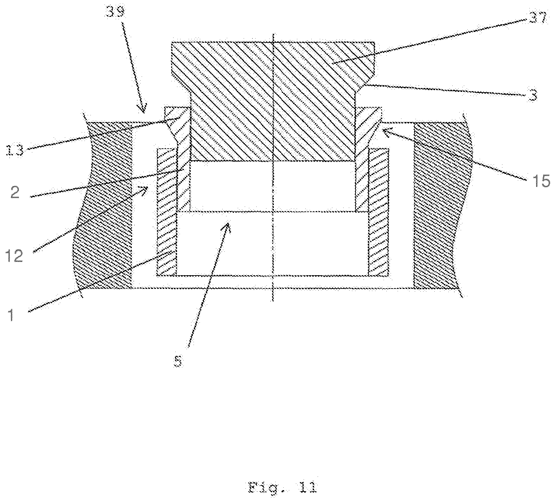

In Fig. 8 ist eine Vorrichtung mit einer Druckschraube 7 anstelle einer gelochten Hutmutter 8 in Ausgangslage gezeigt.

### Bezugszeichenliste:

- 1,1": Erstes Teil
- 2,2',2": Zweites Teil
- 3,3": Druckkontur
- 4: Stutzen
- 5: Durchgangslochung des Dicht- bzw. Klemmelementes
- 6: Mündungsbereich der zylindrischen Aufnahme
- 7: Druckschraube
- 8: Hutmutter
- 9,9": Erster Endbereich erstes Teil
- 10,10',10": Erster Endbereich zweites Teil
- 11,11": Begrenzungskontur
- 12,12": Zweiter Endbereich des ersten Teils
- 13,13',13": Verdickung
- 14: Stützkontur
- 15,15": Zweiter Endbereich des zweiten Teils
- 16: Mündung der Druckschraube/des Druckteils
- 17: Spalt zwischen Stützkontur und Druckschraube oder Hutmutter
- 18: Zweiter Spalt zwischen zweiten Teil und Hutmutter/Druckschraube
- 19: Gleitflächen zwischen den ersten und zweiten Teilen
- 20: Gleitflächen zwischen Druckkontur und dem zweiten Teil (2)
- 21: Umlaufender Vorsprung
- 22: Rinnen, Rillen, Schlitze
- 23: Außengewinde Stutzen
- 24: Außengewinde des Stutzens (Befestigung Hutmutter)
- 25: Innengewinde Hutmutter
- 26: Eingriffskontur Stutzen
- 27: Eingriffskontur Hutmutter

## Patentansprüche

1. Vorrichtung zum abgedichteten Verschließen einer Öffnung, beispielsweise einer Wandöffnung oder beispielsweise einer Ringöffnung, zwischen einer Durchführungsöffnung durch eine Wand oder Einführöffnung in eine Wand, insbesondere einem oder mehreren durch diese Öffnung oder in diese Öffnung hinein geführten Langformteil/en, sowie einem in die Öffnung eingesetzten Dicht- und/oder Klemmelement, **dadurch gekennzeichnet , dass** die Vorrichtung das Dicht- und/oder Klemmelement umfasst, wobei das Dicht- und/oder Klemmelement aus mindestens zwei zusammenwirkenden axial gegeneinander verschiebbaren ersten und zweiten Teilen (1, 2) sowie einer auf dieses mehrteilige Dicht- und/oder Klemmelement axial wirkenden Druckkontur (3) besteht und dass durch eine erste axiale Verschiebung der Druckkontur (3) eine axiale Verschiebung mindestens eines zweiten Teils (2; 2") der mindestens zwei zusammenwirkenden axial gegeneinander verschiebbaren ersten und zweiten Teile (1, 2; 1", 2") des Dicht- und/oder Klemmelements gegenüber dem mindestens einen ersten Teil (1; 1") des Dicht- und/oder Klemmelements eine erste Geometrieänderung im Wesentlichen des mindestens einen ersten Teils (1, 1") quer zur Verschieberichtung erreicht ist, und dass über eine Hutmutter (8), eine Druckschraube (7) oder ein Druckteil (37) beziehungsweise deren oder dessen Druckkontur ein Druck axial auf das erste Teil (1) oder das zweite Teil (2) ausübbar ist, sodass dieses mit zunehmender Ein- oder Aufschraubtiefe zunehmend auf das weitere Teil aufschiebbar ist, und dass durch eine weitere axiale Verschiebung der Druckkontur (3) eine weitere Geometrieänderung quer zur Verschieberichtung des aus den mindestens zwei zusammenwirkenden axial gegeneinander verschiebbaren ersten und zweiten Teilen (1, 2; 1", 2") bestehenden Dicht- und/oder Klemmelements erreicht ist, wobei die Vorrichtung eine Begrenzungskontur (11) umfasst, die als axiale Wegbegrenzung dient und eine Stützkontur (14) aufweist, an der oder in der das erste Teil (1) und/oder das zweite Teil (2) mit dem ersten Endbereich (9, 10) radial innenseitig gestützt oder gehalten ist, so dass dieses beim Aufschieben des weiteren Teils in axialer Richtung gehalten und eine Verschiebung der Teile zueinander möglich ist, und wobei das erste und/oder zweite Teil über ein Drittel seiner Länge von oder in der Stützkontur gehalten ist.

2. Vorrichtung nach Anspruch 1, **dadurch gekennzeichnet, dass** zur abgedichteten Durchführung oder Einführung von Langformteilen eine zylindrische Aufnahme an einer Wandung oder in einer Wandung oder an einem an einer Wandung befestigbaren oder mit dieser einstückig ausgebildeten Stutzen (4) ausgebildet ist, in die das eine Durchgangslochung (5) aufweisende Dicht- und/oder Klemmelement eingesetzt, ist, sowie eine/ein in den oder auf den Mündungsbereich (6) der zylindrischen Aufnahme einbringbare/s, aufsetzbare/s oder einschraubbare/s gelochte/s Druckschraube (7), Hutmutter (8) oder Druckteil mit einer Druckkontur (3) oder als Druckkontur (3) angeordnet ist, die oder das auf das Dicht- und/oder Klemmelement einwirkt, dass das Dicht- und/oder Klemmelement aus mindestens zwei, hülsenartigen, ersten und zweiten Teilen (1, 2) besteht, deren erstes Teil (1) oder zweites Teil (2) mit einem ersten Endbereich (9, 10) an eine Begrenzungskontur (11) der zylindrischen Aufnahme als axiale Wegbegrenzung angeschlossen ist, deren zweites Teil (2) auf das erste Teil (1), dieses mindestens teilweise axial verschieblich übergreifend, aufgesteckt ist, wobei ein zweiter Endbereich (12 oder 15) des ersten Teils (1) und/oder des zweiten Teils (2) durch eine Verdickung (13) des zweiten Teils (2) und/oder des ersten Teils (1) bei mindestens teilweise oder vollständig auf das erste Teil (1) aufgeschobenem zweiten Teil (2) radial verformt ist, und dass in der Druckschraube (7), der Hutmutter (8) oder dem Druckteil eine Druckkontur (3) ausgebildet ist, mittels derer das zweite Teil (2) oder das erste Teil (1) gegenüber dem ersten Teil (1) oder dem zweiten Teil (2) axial verschiebbar ist und mittels derer mindestens das erste hülsenartige Teil (1) und/oder das zweite hülsenartige Teil (2) in einer Montagesolllage radial verformt ist.

3. Vorrichtung nach Anspruch 1 oder 2, **dadurch gekennzeichnet, dass** das die Geometrie ändernde Teil oder die Verdickung (13) eine im zweiten Endbereich (15) des zweiten Teils (2) angeordnete, die Geometrie der Durchgangslochung (5) vorzugsweise radial verkleinernde Verdickung (13) ist, wobei der zweite Endbereich (12) des ersten Teils (1) durch die Verdickung (13) bei mindestens teilweise oder vollständig auf das erste Teil (1) aufgeschobenem zweiten Teil (2) nach radial innen verformt ist und dass in der Druckschraube (7), der Hutmutter (8) oder dem Druckteil eine deren oder dessen lichte Weite einengende Druckkontur (3) ausgebildet ist, mittels derer mindestens der zweite Endbereich (15) des zweiten Teils (2) vorzugsweise zusammen mit dem ersten Teil (1) in einer Montagesolllage nach radial innen verformt ist.

4. Vorrichtung nach einem der Ansprüche 1 bis 3, **dadurch gekennzeichnet, dass** das erste Teil (1) oder das zweite Teil (2) eine im Wesentlichen konstante Dicke über seine Länge aufweist.

5. Vorrichtung nach einem der Ansprüche 1 bis 4, **dadurch gekennzeichnet, dass** beide Teile (1, 2) in etwa eine gleiche Länge aufweisen.

6. Vorrichtung nach einem, der Ansprüche 2 bis 5, **dadurch gekennzeichnet, dass** beide Teile (1, 2) in einer ersten Montagelage stirnseitig an der Begrenzungskontur (11) anliegen.

7. Vorrichtung nach einem der Ansprüche 1 bis 6, **dadurch gekennzeichnet, dass** die verkleinernde Verdickung (13) im zweiten Endbereich (12) des ersten Teils (1) und/oder im zweiten Endbereich (15) des zweiten Teils (2) angeordnet ist und dass der gegenüberliegende erste Endbereich (9 oder 10) dünnwandig ist.

8. Vorrichtung nach einem, der Ansprüche 1 bis 7, **dadurch gekennzeichnet, dass** die verkleinernde Verdickung (13) in der ersten Montagelage und in der Montagesolllage eine Verjüngung der Durchgangslochung (5) bildet.

9. Vorrichtung nach einem der Ansprüche 1 bis 8, **dadurch gekennzeichnet, dass** die Teile (1, 2) mindestens im einander übergreifenden Bereich einander zugewandte Gleitflächen (19) aufweisen.

10. Vorrichtung nach einem der Ansprüche 1 bis 9, **dadurch gekennzeichnet, dass** das zweite Teil (2) mindestens der Druckkontur (3) zugewandte Gleitflächen (20) aufweist.

11. Vorrichtung nach einem der Ansprüche 1 bis 10, **dadurch gekennzeichnet, dass** die Druckkontur (3) durch eine sich in Richtung der Mündung (16) konisch, kegelig, kugelig, konkav, konvex verjüngende Innenwand gebildet ist.

12. Vorrichtung nach einem, der Ansprüche 1 bis 11, **dadurch gekennzeichnet, dass** in der Druckschraube (7), der Hutmutter (8) oder dem Druckteil ein umlaufender Vorsprung (21) angeordnet ist, an dem ein oder mehrere hülsenartige Teile (1, 2) in axialer Richtung abgestützt sind.

13. Vorrichtung nach einem der Ansprüche 1 bis 12, **dadurch gekennzeichnet, dass** ein oder mehrere Teile (1, 2) umlaufend axial und/oder schräg gerichtete Rinnen, Rillen, Schlitze (22) oder dergleichen Materialverjüngungen und/oder Materialaussparungen aufweisen.

14. Vorrichtung nach einem der Ansprüche 1 bis 13, **dadurch gekennzeichnet, dass** das erste Teil (1) und das zweite Teil (2) aus Kunststoff bestehen.

15. Vorrichtung nach einem der Ansprüche 1 bis 14 **dadurch gekennzeichnet, dass** das erste Teil (1) aus verschiedenen Werkstoffen besteht, wobei der Werkstoff des ersten Endbereichs (9) eine höhere Stabilität aufweist als der Werkstoff des zweiten Endbereiches (12),und/oder das zweite Teil (2) gegenüber dem ersten Teil (1) formstabiler ist, insbesondere aus einem formstabilen Kunststoff besteht, während das erste Teil (1) aus einem elastomeren, gummielastischen Kunststoff besteht.

## Claims

1. Device for the sealed closing of an opening, for example a wall opening or for example a ring opening, between a passage opening through a wall or an insertion opening in a wall, in particular of one or more elongate part/s being passed through this opening or into this opening, as well as of a sealing and/or clamping element inserted into the opening, **characterized in that** said device comprises the sealing and/or clamping element, wherein the sealing and/or clamping element consists of at least two interacting first and second parts (1, 2) which are axially displaceable relative to one another, as well as of a pressure contour (3) acting axially onto said multi-part sealing and/or clamping element, and **in that** by means of a first axial displacement of the pressure contour (3), an axial displacement of at least one second part (2; 2") of the at least two interacting parts (1, 2; 1", 2") being axially displaceable relative to one another, of the sealing and/or clamping element relative to the at least one first part (1; 1") of the sealing and/or clamping element is realized, and **in that** a pressure can be exerted axially on the first part (1) or the second part (2) via a cap nut (8), a pressure screw (7) or a pressure part (37) or the pressure contour thereof, so that the latter can be pushed increasingly onto the further part as the screw-in or screw-on depth increases, and **in that** by means of a further axial displacement of the pressure contour (3) a further change in geometry transversely to the displacement direction of the sealing and/or clamping element consisting of the at least two interacting first and second parts (1, 2; 1", 2") which are axially displaceable relative to one another, is realized, wherein the device comprises a limiting contour which serves as an axial path limitation and has a supporting contour (14) on or in which the first part (1) and/or the second part (2) is supported or held with the first end region (9, 10) radially on the inside, so that the latter is held in the axial direction when the further part is pushed on and displacement of the parts relative to one another is possible, and wherein the first and/or second part is held over a third of its length by or is held in the support contour.

2. Device according to claim 1, **characterized in that** for the sealed passing through or passing in of elongate parts, a cylindrical reception is formed at a wall or in a wall or at a stud (4) being attachable to a wall or formed in one piece with it, into which the sealing and/or clamping element having a through hole (5) is inserted, as well as a holed pressure screw (7), a cap nut (8) or a pressure part with a pressure contour (3) or as a pressure contour (3), which can be put into, put onto, or screwed into or onto the opening region (6) of the cylindrical reception, is arranged, which acts upon the sealing and/or clamping element, wherein said sealing and/or clamping element consists of at least two, tube-like, first and second parts (1, 2), said first part (1) or second part (2) of it being connected with a first end region (9, 10) to a delimiting contour (11) of the cylindrical reception as axial path limitation, said second part (2) of it being plugged onto said first part (1), engaging over it at least partly in an axially displaceable manner, wherein a second end region (12 or 15) of said first part (1) and/or of said second part (2) is radially deformed through a thickening (13) of said second part (2) and/or said first part (1) when said second part (2) is at least partly or completely slid onto said first part (1), and wherein in said pressure screw (7), said cap nut (8) or said pressure part, a pressure contour (3) is formed, by means of which said second part (2) or said first part (1) is axially displaceable relative to said first part (1) or said second part (2) and by means of which at least said first tube-like part (1) and/or said second tube-like part (2) is radially deformed in a nominal assembly position.

3. Device according to claim 1 or 2, **characterized in that** said part changing the geometry or said thickening (13) is a thickening (13) arranged in said second end region (15) of said second part (2), preferably radially decreasing the geometry of the through hole (5), wherein said second end region (12) of said first part (1) is, through said thickening (13) when said second part (2) is at least partly or completely slid onto said first part (1), deformed towards radially inwards, and that in said pressure screw (7), said cap nut (8) or said pressure part a pressure contour (3) is formed narrowing its clear width, by means of which at least said second end region (15) of said second part (2) is preferably together with said first part (1) in a nominal assembly position deformed towards radially inwards.

4. Device according to one of the claims 1 to 3, **characterized in that** said first part (1) or said second part (2) has an essentially constant thickness over its length.

5. Device according to one of the claims 1 to 4, **characterized in that** both parts (1, 2) have approximately a same length.

6. Device according to one of the claims 2 to 5, **characterized in that** both parts (1, 2) in a first assembly position abut at their end faces to said delimiting contour (11).

7. Device according to one of the claims 1 to 6, **characterized in that** the decreasing thickening (13) is arranged in said second end region (12) of said first part (1) and/or in said second end region (15) of said second part (2), and that the facing first end region (9 or 10) is thin-walled.

8. Device according to one of the claims 1 to 7, **characterized in that** said decreasing thickening (13) in the first assembly position and in the nominal assembly position forms a tapering of said through hole (5).

9. Device according to one of the claims 1 to 8, **characterized in that** said parts (1, 2) have at least in the area overlapping each other, sliding surfaces (19) facing each other.

10. Device according to one of the claims 1 to 9, **characterized in that** said second part (2) at least has sliding surfaces (20) facing said pressure contour (3).

11. Device according to one of the claims 1 to 10, **characterized in that** said pressure contour (3) is formed by an inner wall tapering conically, tapered, spherically, concavely, convexly in the direction of the opening (16).

12. Device according to one of the claims 1 to 11, **characterized in that** a circumferential protrusion (21) is arranged in said pressure screw (7), said cap nut (8) or said pressure part, which supports one or more tube-like parts (1, 2) in the axial direction.

13. Device according to one of the claims 1 to 12, **characterized in that** one or more parts (1, 2) have circumferential axially and/or obliquely directed channels, grooves, slots (22) or similar material tapering and/or material recesses.

14. Device according to one of the claims 1 to 13, **characterized in that** said first part (1) and said second part (2) are made of a plastic.

15. Device according to one of the claims 1 to 14, **characterized in that** said first part (1) is made of various materials, wherein the material of said first end region (9) has a higher stability than the material of said second end region (12),and/or said second part (2) as compared with said first part (1) is more dimensionally stable, in particular being made of a dimensionally stable plastic, whereas said first part (1) is made of an elastomeric, rubber-elastic plastic.

## Revendications

1. Dispositif pour fermer de manière étanche une ouverture, par exemple une ouverture dans une paroi ou par exemple une ouverture annulaire, entre une ouverture de passage à travers une paroi ou une ouverture d'introduction dans une paroi, en particulier une ou plusieurs pièce/s de forme allongée guidées à travers cette ouverture ou dans cette ouverture, ainsi qu' un élément d' étanchéité et / ou de serrage inséré dans l'ouverture, **caractérisé**
**en ce que** le dispositif comprend l'élément d' étanchéité et / ou de serrage, dans lequel l'élément d' étanchéité et / ou de serrage est constitué d'au moins deux premières et deuxièmes pièces (1, 2) coopérantes et déplaçables axialement l'une par rapport à l'autre, ainsi que d'un contour de pression (3) agissant axialement sur cet élément d' étanchéité et / ou de serrage en plusieurs pièces, et
**en ce que**, par un premier déplacement axial du contour de pression (3), il est obtenu un déplacement axial d'au moins une deuxième pièce (2 ; 2") des au moins deux premières et deuxièmes pièces (1, 2 ; 1", 2") coopérantes et déplaçables axialement l'une par rapport à l'autre, de l'élément d' étanchéité et / ou de serrage par rapport à la au moins une première pièce (1 ; 1") de l'élément d' étanchéité et / ou de serrage et une première modification de géométrie essentiellement de la au moins une première pièce (1, 1") transversalement à la direction du déplacement, et
**en ce que**, par l'intermédiaire d'un écrou borgne (8), d'une vis de pression (7) ou d'une pièce de pression (37) ou plus particulièrement de son contour de pression, une pression peut être exercée axialement sur la première pièce (1) ou la deuxième pièce (2), de sorte que celle-ci peut être glissée de plus en plus sur l'autre pièce au fur et à mesure que la profondeur de vissage ou de dévissage augmente, et
**en ce que**, par un déplacement axial supplémentaire du contour de pression (3), il est obtenu une modification supplémentaire de la géométrie transversalement à la direction de déplacement de l'élément d' étanchéité et / ou de serrage constitué par les au moins deux premières et deuxièmes pièces (1, 2 ; 1", 2") coopérantes et déplaçables axialement l'une par rapport à l'autre,
dans lequel le dispositif comprend un contour de limitation (11) qui sert de limitation de course axiale, et présente un contour d' appui (14) sur lequel ou dans lequel la première pièce (1) et / ou la deuxième pièce (2) est soutenue ou maintenue radialement vers l'intérieur par la première zone d' extrémité (9, 10), de sorte que celle-ci est maintenue dans la direction axiale lors de l'enfilage de l'autre pièce et qu' un déplacement des pièces l'une par rapport à l'autre est possible, et
dans lequel la première et / ou la deuxième pièce est maintenue sur un tiers de sa longueur par ou dans le contour d' appui.

2. Dispositif selon la revendication 1, **caractérisé**
**en ce que**, pour le passage ou l'introduction étanche de pièces de forme allongée, un logement cylindrique est réalisé sur une paroi ou dans une paroi ou sur une tubulure (4) pouvant être fixée sur une paroi ou réalisée d'une seule pièce avec celle-ci, dans lequel est inséré l'élément d' étanchéité et / ou de serrage présentant un trou de passage (5), ainsi qu'une vis de pression (7), un écrou borgne (8) ou une pièce de pression perforée et pouvant être introduite, posée ou vissée dans ou sur la zone d' embouchure (6) du logement cylindrique, avec un contour de pression (3) ou comme contour de pression (3) est disposée, laquelle ou lequel agit sur l'élément d' étanchéité et / ou de serrage,
**en ce que** l'élément d' étanchéité et / ou de serrage est constitué d'au moins deux premières et deuxièmes pièces (1, 2) en forme de douille, dont la première pièce (1) ou la deuxième pièce (2) est raccordée par une première zone d' extrémité (9, 10) à un contour de limitation (11) du logement cylindrique en tant que limitation de course axiale, dont la deuxième pièce (2) est emboîtée sur la première pièce (1), en recouvrant celle-ci au moins partiellement de manière axialement mobile,
dans lequel une deuxième zone d' extrémité (12 ou 15) de la première pièce (1) et / ou de la deuxième pièce (2) est déformée radialement par un épaississement (13) de la deuxième pièce (2) et / ou de la première pièce (1) lorsque la deuxième pièce (2) est enfilée au moins partiellement ou complètement sur la première pièce (1), et en ce que dans la vis de pression (7), l'écrou borgne (8) ou la pièce de pression est formé un contour de pression (3) au moyen duquel la deuxième pièce (2) ou la première pièce (1) peut être déplacée axialement par rapport à la première pièce (1) ou à la deuxième pièce (2) et au moyen duquel au moins la première pièce (1) en forme de douille et / ou la deuxième pièce (2) en forme de douille est déformée radialement dans une position nominale de montage.

3. Dispositif selon la revendication 1 ou 2, **caractérisé**
**en ce que** la pièce modifiant la géométrie ou le épaississement (13) est un épaississement (13) disposé dans la deuxième zone d' extrémité (15) de la deuxième pièce (2) et réduisant de préférence radialement la géométrie du trou de passage (5), dans lequel la deuxième zone d' extrémité (12) de la première pièce (1) est déformée radialement vers l'intérieur par l'épaississement (13) lorsque la deuxième pièce (2) est au moins partiellement ou complètement enfilée sur la première pièce (1), et
**en ce que** dans la vis de pression (7), l'écrou borgne (8) ou la pièce de pression est formé un contour de pression (3) restreignant la largeur libre de celle-ci ou de celui-ci, au moyen duquel au moins la deuxième zone d'extrémité (15) de la deuxième pièce (2) est déformée radialement vers l'intérieur, de préférence conjointement avec la première pièce (1), dans une position de consigne de montage.

4. Dispositif selon l'une des revendications 1 à 3, **caractérisé en ce que** la première pièce (1) ou la deuxième pièce (2) présente une épaisseur sensiblement constante sur sa longueur.

5. Dispositif selon l'une des revendications 1 à 4, **caractérisé en ce que** les deux pièces (1, 2) présentent approximativement la même longueur.

6. Dispositif selon l'une des revendications 2 à 5, **caractérisé en ce que** les deux pièces (1, 2) sont en contact frontal avec le contour de limitation (11) dans une première position de montage.

7. Dispositif selon l'une des revendications 1 à 6, **caractérisé**
**en ce que** l'épaississement (13) réduisant est disposé dans la deuxième zone d' extrémité (12) de la première pièce (1) et / ou dans la deuxième zone d' extrémité (15) de la deuxième pièce (2), et
**en ce que** la première zone d' extrémité (9 ou 10) opposée est à paroi mince.

8. Dispositif selon l'une des revendications 1 à 7, **caractérisé en ce que** l'épaississement (13) réduisant forme un rétrécissement du trou de passage (5) dans la première position de montage et dans la position de consigne de montage.

9. Dispositif selon l'une des revendications 1 à 8, **caractérisé en ce que** les pièces (1, 2) présentent des surfaces de glissement (19) tournées l'une vers l'autre au moins dans la zone de chevauchement.

10. Dispositif selon l'une des revendications 1 à 9, **caractérisé en ce que** la deuxième pièce (2) présente au moins des surfaces de glissement (20) tournées vers le contour d'impression (3).

11. Dispositif selon l'une des revendications 1 à 10, **caractérisé en ce que** le contour d'impression (3) est formé par une paroi intérieure se rétrécissant en forme de cône, de quille, de sphère, de concavité, de convexité en direction de l'embouchure (16).

12. Dispositif selon l'une des revendications 1 à 11, **caractérisé en ce qu'**une saillie périphérique (21) est disposée dans la vis de pression (7), l'écrou borgne (8) ou la pièce de pression, sur laquelle une ou plusieurs pièces en forme de douille (1, 2) sont appuyées dans la direction axiale.

13. Dispositif selon l'une des revendications 1 à 12, **caractérisé en ce qu'**une ou plusieurs pièces (1, 2) présentent des rainures, des cannelures, des fentes (22) ou des évidements de matière similaires et / ou des rétrécissements de matière orientés axialement et / ou obliquement sur leur pourtour.

14. Dispositif selon l'une des revendications 1 à 13, **caractérisé en ce que** la première pièce (1) et la deuxième pièce (2) sont en matière plastique.

15. Dispositif selon l'une des revendications 1 à 14, **caractérisé en ce que**
la première pièce (1) est constituée de différents matériaux, dans lequel le matériau de la première zone d' extrémité (9) présente une stabilité supérieure à celle du matériau de la deuxième zone d' extrémité (12), et / ou
la deuxième pièce (2) est plus indéformable que la première pièce (1), en particulier est constituée d'une matière plastique indéformable, tandis que la première pièce (1) est constituée d'une matière plastique élastomère et élastique comme du caoutchouc.
